# FASCICULE DE BREVET EUROPEEN

(11) **EP 0 954 148 B1**
(45) Date de publication et mention de la délivrance du brevet: **20.12.2006**
(21) Numéro de dépôt: 99400920.7
(22) Date de dépôt: 15.04.1999
(51) Int. Cl.: H04L 29/06, H04Q 3/00

(54) **Profil d'abonné internet**
Internetteilnehmerprofil
Internet subscriber profile

(30) Priorité: 30.04.1998 FR 9805540
(43) Date de publication de la demande: 03.11.1999
(73) Titulaire: ALCATEL, 75008 Paris (FR)
(72) Inventeur: Bleuse, Patrice, 91620 La Ville du Bois (FR); Lapierre, Martine, 92190 Meudon (FR)
(74) Mandataire: Sciaux, Edmond

(56) Documents cités:
- EP-A- 0 802 690
- US-A- 5 610 910
- LECONTE A, SEVCIK M: "Reshaping the IN for multimedia: is there a life after Internet?" 4TH INTERNATIONAL CONFERENCE ON INTELLIGENCE IN NETWORKS, ICIN 96, PROCEEDINGS,novembre 1996 (1996-11), pages 2-6, XP002093850 1996, Pessac, France, ADERA, France

## Description

La présente invention a pour objet un procédé de personnalisation des accès au réseau internet; elle concerne aussi un réseau téléphonique intelligent, ainsi qu'un service de personnalisation des accès au réseau internet.

L'invention concerne le domaine de l'accès aux réseaux, et plus particulièrement l'accès au réseau Internet. Dans la suite de la description, on utilisera l'exemple de ce réseau, étant entendu que l'invention pourrait aussi s'appliquer à d'autres réseaux.

Pour un utilisateur, l'accès au réseau Internet s'effectue généralement depuis un terminal utilisateur, en passant par le réseau téléphonique pour établir une communication avec un fournisseur d'accès ("Internet service provider" en langue anglaise, ou ISP). Le réseau téléphonique peut être le réseau téléphonique commuté classique, un réseau public mobile, un réseau numérique tel le réseau numérique à intégration de service français. Le fournisseur d'accès alloue dynamiquement une adresse internet à l'utilisateur, et lui permet d'émettre et recevoir des communications suivant le protocole internet, vers et en provenance de fournisseurs de contenu ("contents provider" en langue anglaise).

On appelle services du "réseau intelligent" l'ensemble des services dits à valeur ajoutée fournis par les opérateurs téléphoniques, au delà de la simple offre d'établissement d'une ligne et de facturation. Ces services comprennent par exemple le transfert d'appel, le prépaiement, le libre appel, les services de tarification spécifique liés à certains appels, l'authentification de l'appelant et autres (voir par exemple le document EP-A-802 690).

Le développement rapide de l'internet pose des problèmes nouveaux; en terme de contenu, les informations disponibles sur le réseau peuvent présenter un caractère choquant (informations à caractère érotique, notamment), ou leur diffusion peut être illégale dans certains contextes (certaines informations politiques). En fonction de l'utilisation envisagée du réseau, des formes de filtrages sont souhaitées; filtrage par les parents de l'accès des enfants au réseau; filtrage par les États des informations diffusées sur leur territoire par le réseau; filtrage par les entreprises des accès des salariés au réseau.

Diverses solutions ont ainsi été proposées pour permettre un filtrage des informations obtenues sur le réseau; des produits logiciels destinés à être installés sur le terminal d'un utilisateur permettent de filtrer l'accès à certains sites internet. Ces produits sont limités et présentent les inconvénients suivants: le filtrage par les noms de site est difficile à mettre en oeuvre, dans la mesure où il exige une mise à jour permanente. Une telle mise à jour est difficilement réalisable pratiquement au vu du grand nombre de sites créés chaque jour, et au vu de la facilité technique de transfert d'un site vers une autre adresse internet. Ces dispositifs de filtrage peuvent être relativement facilement désactivés, par exemple à l'aide d'informations disponibles sur le réseau.

Outre ce problème de filtrage connu se pose aussi un problème nouveau d'adaptation du réseau internet aux caractéristiques propres d'un appelant donné. Se pose aussi le problème nouveau de maintien d'un même type de service indépendamment du fournisseur d'accès.

L'invention propose donc une solution au problème nouveau d'adaptation des consultations internet aux caractéristiques propres d'un utilisateur. Elle permet en outre de fournir à un utilisateur un service adapté, quelque soit le fournisseur d'accès choisi.

Plus précisément, l'invention propose un procédé de personnalisation des accès au réseau internet à travers un réseau d'accès, tel le réseau téléphonique, et par l'intermédiaire d'un fournisseur d'accès, comprenant les étapes:
- d'affectation par le réseau d'accès d'un profil d'appelant internet lors de l'établissement d'une communication téléphonique en vue d'un accès au réseau internet;
- de transmission par le réseau d'accès du profil d'appelant internet au fournisseur d'accès; et
- de personnalisation de l'accès internet par le fournisseur d'accès, en fonction du profil d'appelant internet.

Dans un mode de réalisation, le réseau d'accès est un réseau intelligent. Le réseau d'accès peut aussi comprendre une fonction intelligente permettant la gestion des profils d'appelant internet.

Avantageusement, le profil d'appelant internet comprend des informations relatives aux transactions internet, telles que des informations de filtrage des accès.

Le profil d'appelant peut aussi comprendre des informations relatives à la communication téléphonique, telles que des informations de facturation, de paiement, ou d'autorisation des appels.

Dans un mode de réalisation, le profil d'appelant internet comprend des informations communes à tous les fournisseurs d'accès, et des informations spécifiques à chaque fournisseur d'accès. Il peut aussi comprendre des informations spécifiques à un utilisateur.

Avantageusement, le procédé comprend une étape de mise à jour du profil d'appelant internet par le fournisseur d'accès, ou une étape de mise à jour du profil d'appelant internet d'un utilisateur par l'utilisateur lui-même.

De préférence, le procédé comprend une étape de création du profil d'appelant internet par le réseau d'accès.

Avantageusement, le profil d'appelant internet d'un utilisateur est conservé d'un accès internet à l'autre, ou lors d'un changement de fournisseur d'accès.

L'invention propose aussi un réseau d'accès intelligent, comprenant des moyens d'affectation d'un profil d'appelant internet lors de l'établissement d'une communication téléphonique en vue d'un accès au réseau internet, et des moyens de transmission du profil d'appelant internet vers un fournisseur d'accès à l'internet.

Le réseau peut comprendre des moyens de réception d'informations de mise à jour d'un profil d'appelant internet depuis un fournisseur d'accès.

L'invention propose encore un service de personnalisation d'accès à l'internet, comprenant:
- l'affectation d'un profil d'appelant internet à un utilisateur; et
- la transmission du profil d'appelant internet à un fournisseur d'accès lors de l'établissement d'une communication en vue d'un accès internet.

Avantageusement, le profil d'appelant internet comprend des informations relatives aux transactions internet, telles que des informations de filtrage des accès.

Dans un autre mode de réalisation, le profil d'appelant comprend des informations relatives à la communication téléphonique, telles que des informations de facturation, de paiement, ou d'autorisation des appels.

Le profil d'appelant internet peut aussi comprendre des informations communes à tous les fournisseurs d'accès, et des informations spécifiques à chaque fournisseur d'accès, ou des informations spécifiques à un utilisateur.

D'autres caractéristiques et avantages de l'invention apparaîtront à la lecture de la description qui suit de modes de réalisation de l'invention, donnée à titre d'exemple uniquement, au cas du réseau internet, et en référence aux figures qui montrent:
- figure 1, une représentation schématique d'une liaison internet.
- figure 2, une représentation des étapes d'un accès internet selon l'invention.

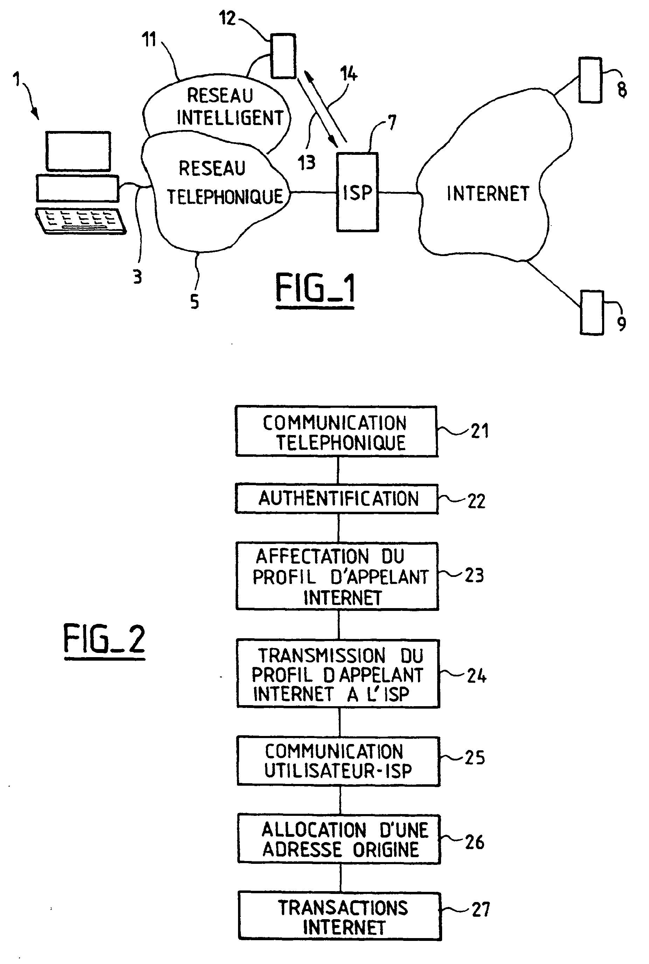

On a porté sur la figure 1 un terminal utilisateur 1, relié comme symbolisé par la liaison 3 à un réseau d'accès 5; dans l'exemple de la figure et dans toute la suite de la description, on considère un réseau téléphonique, tel que le réseau public commuté, un réseau public mobile ou autre. Le terminal utilisateur peut être relié au réseau directement, ou par l'intermédiaire d'un autocommutateur privé. On a porté sur la figure un fournisseur d'accès à l'internet 7, ainsi qu'une représentation schématique du réseau internet, avec deux fournisseurs de contenu 8 et 9. Entre le terminal utilisateur 1 et le fournisseur de service - à gauche du fournisseur de service sur la figure 1, la communication s'effectue sur le canal utilisé dans le réseau téléphonique en cause, et qui est d'une nature différente selon ce réseau. Entre le fournisseur d'accès et les fournisseurs de contenu, la communication s'effectue suivant le protocole internet.

L'invention propose d'utiliser pour l'accès à l'internet, les capacités du réseau intelligent - symbolisé par 11 sur la figure - pour assurer une personnalisation des accès à l'internet. Pour cela, elle propose d'utiliser le réseau téléphonique pour gérer un profil d'appelant internet; ce profil est affecté par le réseau téléphonique lors de l'établissement d'une communication téléphonique en vue d'un accès au réseau internet. Il est transmis au fournisseur d'accès choisi, qui peut alors paramétrer ou personnaliser la communication internet.

La gestion et la transmission d'un profil d'appelant internet peut simplement s'effectuer par les fonctionnalités du réseau intelligent, le cas échéant en faisant en outre appel aux fonctionnalités d'identification et d'authentification de l'appelant.

On décrit dans la suite un accès internet suivant un mode de réalisation de l'invention, en référence à la figure 2. Cette figure montre une représentation des étapes d'un tel accès. Dans une première étape 21, l'utilisateur entre en communication avec le fournisseur d'accès; dans l'exemple, il établit une communication téléphonique, en composant le numéro téléphonique de son fournisseur d'accès. On peut aussi prévoir que l'utilisateur compose un numéro de téléphone commun à plusieurs fournisseurs d'accès.

A l'étape 22, si nécessaire, l'utilisateur est authentifié, par le réseau téléphonique. On peut utiliser pour cette authentification un service connu en soi du réseau intelligent, tel que mot de passe, carte magnétique, carte à puce, etc.

A l'étape 23, après l'éventuelle authentification, le réseau téléphonique affecte un profil d'appelant internet à l'utilisateur. Ce profil d'appelant internet comprend l'ensemble des paramètres permettant de personnaliser l'accès internet; ces paramètres peuvent être transmis de manière exhaustive ou sous forme d'un code résumé, ou avec toute solution intermédiaire. Ces paramètres peuvent être des paramètres internet - par exemple une liste de site interdits ou autorisés, des variables d'environnement, groupe privé virtuel, paramètres de facturation, numéro d'abonnement de l'utilisateur auprès du fournisseur d'accès ou autres -, des paramètres relatifs à la communication téléphonique - type de transmission à utiliser, protection par cryptage, paiement, facturation, ou autres-. La définition originale d'un profil d'appelant internet peut être proposé par le réseau intelligent lors de la première connexion, ou peut correspondre à un abonnement. Avantageusement, le profil est ensuite conservé, d'un accès à l'internet à l'autre, voire même en cas de changement de fournisseur d'accès.

A l'étape 24, ce profil d'appelant internet est transmis par le réseau téléphonique au fournisseur d'accès. Celui-ci peut être choisi par le numéro d'appel téléphonique composé, ou peut être déterminé en fonction du profil d'appelant internet. La communication téléphonique entre l'utilisateur et le fournisseur d'accès peut alors être établie - étape 25 - et le fournisseur peut affecter à l'utilisateur une adresse IP origine - étape 26 -. L'utilisateur peut ensuite émettre et recevoir des messages suivant le protocole internet - étape 27-; lors de cette étape, le fournisseur d'accès peut continuer à consulter et utiliser les paramètres du profil d'appelant internet, pour personnaliser le service fourni, comme expliqué plus bas.

Avantageusement, le profil d'appelant internet peut être mis à jour par le fournisseur d'accès; ceci permet par exemple d'interdire des tentatives d'accès ultérieur d'un utilisateur, comme expliqué plus bas. On peut aussi prévoir que le profil d'appelant internet peut être mis à jour par l'utilisateur, ou par d'autres utilisateurs disposant de droits, comme expliqué aussi plus bas.

Il convient de noter que le profil d'appelant internet, tel que prévu dans l'invention, ne dépend pas du fournisseur d'accès, i. e. n'est pas limité à un fournisseur d'accès particulier. Le profil d'appelant internet peut ainsi contenir des paramètres applicable à différents fournisseurs d'accès, de sorte à fournir une même personnalisation des appels internet d'un utilisateur, quel que soit le fournisseur d'accès choisi. Ceci n'empêche pas non plus que le profil d'accès internet contienne des paramètres spécifiques à un fournisseur d'accès particulier.

On décrit maintenant différentes applications de l'invention.

### Prépaiement.

L'invention permet un prépaiement lors des appels internet. Dans ce cas, la communication téléphonique est établie avec le réseau intelligent, et l'utilisateur procède au prépaiement, en utilisant des fonctions de prépaiement connues en soi sur le réseau intelligent; le profil d'appelant internet contient une information relative à l'existence du prépaiement, pour indiquer au fournisseur d'accès que la transaction en cause est une transaction prépayée; il contient en outre une information relative au montant prépayé, qui est mise à jour au fur et à mesure de la consommation du crédit. Le surplus du montant prépayé, s'il existe, peut être conservé et affecté ultérieurement à une autre transaction. Sinon, lorsque le montant prépayé est consommé, la connexion est interrompue - le cas échéant après une invitation à recréditer envoyée à l'usager.

Cette application permet d'éviter des factures trop élevées, générées soit par négligence, soit par les enfants ou par des tiers; elle diminue en outre le taux de réclamations vers l'internet

### Accès sans abonnement.

L'invention permet un accès internet sans abonnement permanent auprès d'un fournisseur d'accès. Dans un tel cas, le profil d'utilisateur indique que l'utilisateur n'a pas d'abonnement auprès du fournisseur d'accès. La demande de connexion internet formée auprès du fournisseur d'accès peut néanmoins être acceptée, et les coûts engendrés par la connexion peuvent être transmis par le fournisseur d'accès au réseau intelligent pour être facturés directement sur le compte téléphonique de l'utilisateur.

Cette application de l'invention peut par exemple être utilisée pour l'envoi sans abonnement internet de télécopies ou de courriers électroniques sur le réseau internet, sans abonnement.

Cette application de l'invention peut aussi être combinée à l'application de prépaiement.

Elle permet d'éviter les lourdeurs et les contraintes d'un processus d'abonnement, qui peuvent rebuter des utilisateurs.

### Surveillance et interruption d'appel.

Le réseau téléphonique peut interrompre l'appel s'il reçoit une indication d'accès prohibé. Ce peut être le cas par exemple dans le cas d'un filtrage des appels, comme décrit dans la demande de brevet déposée le même jour que la présente demande sous le titre "Utilisation du couplage entre le numéro d'appel et l'adresse d'origine internet" (référence interne F°101494). Dans un tel cas, le contenu des transactions internet est filtré au niveau du fournisseur d'accès. Une violation des critères de filtrage (par exemple des critères fixés par des parents pour leurs enfants) peut conduire à une interruption de la communication par le réseau intelligent, par simple mise à jour du profil internet par le fournisseur d'accès. Dans ce cas minimal, le profil d'appelant internet sert simplement pour assurer la déconnexion de l'utilisateur

Un tel filtrage peut aussi être mis en oeuvre à l'échelon national, par exemple pour satisfaire les contraintes réglementaires.

Cette solution est plus fiable et plus efficace qu'une gestion locale - par exemple domestique ou au niveau d'un autocommutateur privé -. La restriction d'accès aux listes et aux autorisations est plus efficace. En outre, on peut s'attendre à ce que la qualité du service fourni par l'opérateur du réseau intelligent soit supérieure au service domestique.

### Interception des tentatives d'accès répétitives.

L'utilisation d'un profil d'appelant internet permet d'éviter une nouvelle connexion du même appelant, par exemple après une ou plusieurs violations du filtrage; en effet, il suffit alors que le fournisseur d'accès mette à jour le profil d'appelant internet de l'utilisateur pour indiquer qu'il refusera les appels ultérieurs.

L'invention permet ainsi de refuser l'appel téléphonique vers le fournisseur d'accès; ceci évite en conséquence d'encombrer les ressources téléphoniques du fournisseur d'accès par des appels qui doivent être rejetés, pour une raison ou pour une autre.

Le profil d'utilisateur peut être mis à jour pour de nouveau autoriser les appels, soit par un utilisateur disposant de droits - par exemple un adulte pour la mise à jour du profil utilisateur d'un mineur -, ou après une période de temps prédéterminée.

Cette application de l'invention permet de gérer des listes "grises" ou "noires" pour chaque fournisseur d'accès, ou encore pour tout accès internet.

### Création de groupe privé virtuel.

La gestion des profils d'appelant internet permet de définir des regroupements d'appelants, de leur affecter des droits identiques, et de les gérer de façon commune.

Ceci peut être utile, par exemple pour le fournisseur de services utilisant le réseau intelligent ou pour les fournisseurs d'accès, pour une meilleure gestion de leurs clients, et pour fournir des services mieux segmentés et adaptés; ce peut aussi être utile pour les utilisateurs, pour créer des groupes privés - par exemple pour que des parents créent des groupes pour leurs enfants, pour que des professeurs créent des groupes pour leurs élèves, ou pour que les responsables d'une entreprise ou d'un service créent des groupes pour les employés -.

### Authentification.

Comme expliqué plus haut, on peut prévoir une authentification des appelants internet. Le degré d'authentification peut dépendre du profil de l'appelant, ou de son groupe privé virtuel.

### Appels téléphoniques entrants.

L'invention permet en outre de présenter les appels téléphoniques entrants, sous forme de voix paquetisée, pendant la connexion internet.

L'invention peut être mise en oeuvre par divers moyens matériels. Elle peut simplement être mise en oeuvre en prévoyant dans l'unité de gestion du réseau téléphonique - référencé 12 sur la figure 1 - des moyens d'affectation d'un profil d'appelant internet lors de la réception d'appels téléphoniques en vue d'un accès au réseau internet. On prévoit aussi des moyens d'envoi au fournisseur d'accès du profil internet, comme symbolisé par la flèche 13 de la figure 1. En sens inverse, le profil d'appelant internet peut être mis à jour par le fournisseur d'accès, comme symbolisé par la flèche 14 allant vers l'unité de gestion du système téléphonique. Il suffit par exemple pour cela de prévoir des moyens d'envoi à l'unité de gestion du réseau téléphonique d'informations de mise à jour des profils d'appelant internet. Cet envoi peut s'effectuer à travers le réseau téléphonique.

Bien entendu, la présente invention n'est pas limitée aux exemples et modes de réalisation décrits et représentés, mais elle est susceptible de nombreuses variantes accessibles à l'homme de l'art. On pourrait ainsi appliquer l'invention à d'autres types de réseaux que le réseau internet. On peut prévoir que le profil d'appelant internet comprend d'autres informations que celles décrites dans les différents exemples, en fonction des applications envisagées et des services proposés.

## Revendications

1. Procédé de personnalisation des accès au réseau internet (8, 9) à travers un réseau d'accès (5; 11) et par l'intermédiaire d'un fournisseur d'accès (7), comprenant les étapes:
- d'affectation par le réseau d'accès (5, 11) d'un profil d'appelant internet lors de l'établissement d'une communication téléphonique en vue d'un accès au réseau internet;
- de transmission par le réseau d'accès du profil d'appelant internet au fournisseur d'accès; et
- de personnalisation de l'accès internet par le fournisseur d'accès, en fonction du profil d'appelant internet.

2. Procédé selon la revendication 1, **caractérisé en ce que** le réseau d'accès (11) est un réseau intelligent.

3. Procédé selon la revendication 1, **caractérisé en ce que** le réseau d'accès comprend une fonction intelligente (11) permettant la gestion des profils d'appelant internet.

4. Procédé selon la revendication 1, 2 ou 3, **caractérisé en ce que** le profil d'appelant internet comprend des informations relatives aux transactions internet, telles que des informations de filtrage des accès.

5. Procédé selon l'une des revendications 1 à 4, **caractérisé en ce que** le profil d'appelant comprend des informations relatives à la communication téléphonique, telles que des informations de facturation, de paiement, ou d'autorisation des appels.

6. Procédé selon l'une des revendications 1 à 5, **caractérisé en ce que** le profil d'appelant internet comprend des informations communes à tous les fournisseurs d'accès, et des informations spécifiques à chaque fournisseur d'accès.

7. Procédé selon l'une des revendications 1 à 6, **caractérisé en ce qu'**il comprend une étape de mise à jour du profil d'appelant internet par le fournisseur d'accès.

8. Procédé selon l'une des revendications 1 à 7, **caractérisé en ce qu'**il comprend une étape de mise à jour du profil d'appelant internet d'un utilisateur par l'utilisateur lui-même.

9. Procédé selon l'une des revendications 1 à 8, **caractérisé en ce qu'**il comprend une étape de création du profil d'appelant internet par le réseau d'accès.

10. Procédé selon l'une des revendications 1 à 9, **caractérisé en ce que** le profil d'appelant internet d'un utilisateur est conservé d'un accès internet à l'autre.

11. Procédé selon l'une des revendications 1 à 10, **caractérisé en ce que** le profil d'appelant internet d'un utilisateur est conservé lors d'un changement de fournisseur d'accès.

12. Réseau d'accès intelligent, comprenant des moyens d'affectation d'un profil d'appelant internet lors de l'établissement d'une communication téléphonique en vue d'un accès au réseau internet, et des moyens de transmission du profil d'appelant internet vers un fournisseur d'accès à l'internet.

13. Réseau selon la revendication 12, **caractérisé par** des moyens de réception d'informations de mise à jour d'un profil d'appelant internet depuis un fournisseur d'accès.

14. Procédé de personnalisation d'accès à l'internet, comprenant:
- l'affectation par un réseau d'accès d'un profil d'appelant internet à un utilisateur; et
- la transmission du profil d'appelant internet par le réseau d'accès à un fournisseur d'accès lors de l'établissement d'une communication en vue d'un accès internet.

15. Procédé selon la revendication 14, **caractérisé en ce que** le profil d'appelant internet comprend des informations relatives aux transactions internet, telles que des informations de filtrage des accès.

16. Procédé selon la revendication 14 ou 15, **caractérisé en ce que** le profil d'appelant comprend des informations relatives à la communication téléphonique, telles que des informations de facturation, de paiement, ou d'autorisation des appels.

17. Procédé selon la revendication 14, 15 ou 16, **caractérisé en ce que** le profil d'appelant internet comprend des informations communes à tous les fournisseurs d'accès, et des informations spécifiques à chaque fournisseur d'accès.

## Claims

1. Method of personalization of access to the Internet network (8, 9) via an access network (5; 11) and through the intermediary of an Internet service provider (7), comprising the steps of:
- assigning by the access network (5, 11) of an Internet caller profile during the setting up of a telephone call with a view to access to the Internet network;
- transmission by the access network of the Internet caller profile to the Internet service provider; and
- personalization of Internet access by the Internet service provider as a function of the Internet caller profile.

2. Method according to claim 1, **characterized in that** the access network (11) is an intelligent network.

3. Method according to claim 1, **characterized in that** the access network comprises an intelligent function (11) enabling management of the Internet caller profile.

4. Method according to claim 1, 2 or 3, **characterized in that** the Internet caller profile comprises information relating to Internet transactions, such as access filtering information.

5. Method according to any one of claims 1 to 4, **characterized in that** the caller profile comprises information relating to the telephone call, such as billing, payment or call authorization information.

6. Method according to any one of claims 1 to 5, **characterized in that** the Internet caller profile comprises information common to all Internet service providers and information specific to each Internet service provider.

7. Method according to any one of claims 1 to 6, **characterized in that** it comprises a step of updating of the Internet caller profile by the Internet service provider.

8. Method according to any one of claims 1 to 7, **characterized in that** it comprises a step of updating of the Internet caller profile of a user by the user himself.

9. Method according to any one of claims 1 to 8, **characterized in that** it comprises a step of creation of the Internet caller profile by the access network.

10. Method according to any one of claims 1 to 9, **characterized in that** the Internet caller profile of a user is retained from one Internet access to another.

11. Method according to any one of claims 1 to 10, **characterized in that** the Internet caller profile of a user is retained at the time of a change of Internet service provider.

12. Intelligent access network, comprising means for assigning an Internet caller profile at the time of setting up a telephone call with a view to access to the Internet network and means for transmission of the Internet caller profile to an Internet service provider.

13. Network according to claim 12, **characterized by** means for receiving Internet caller profile updating information from an Internet service provider.

14. Internet access personalization method, comprising:
- the assignment by an access network of an Internet caller profile to a user, and
- the transmission of the Internet caller profile by the access network to an Internet service provider at the time of setting up a call with a view to access to the Internet.

15. Method according to claim 14, **characterized in that** the Internet caller profile comprises information relating to Internet transactions, such as access filtering information.

16. Method according to claim 14 or 15, **characterized in that** the caller profile comprises information relating to the telephone call, such as billing, payment or call authorization information.

17. Method according to claim 14, 15 or 16, **characterized in that** the Internet caller profile comprises information common to all Internet service providers and information specific to each Internet service provider.

## Patentansprüche

1. Verfahren zur Personalisierung des Internet-Zugriffs (8, 9) über ein Anschaltenetz (5, 11) und mit Hilfe eines Internet Providers (7), das folgende Schritte umfasst:
- Zuordnung eines Internet-Teilnehmerprofils durch das Anschaltenetz (5, 11) bei der Herstellung einer Telefonverbindung im Hinblick auf den Zugriff auf das Internet;
- Übertragung des Internet-Teilnehmerprofils an den Internet Provider über das Anschaltenetz; und
- Personalisierung des Internet-Zugriffs durch den Internet Provider in Abhängigkeit von dem Internet-Teilnehmerprofil.

2. Verfahren gemäß Anspruch 1, **dadurch gekennzeichnet, dass** es sich bei dem Anschaltenetz (11) um ein intelligentes Netzwerk handelt.

3. Verfahren gemäß Anspruch 1, **dadurch gekennzeichnet, dass** das Anschaltenetz eine intelligente Funktion (11) umfasst, die die Verwaltung der Internet-Teilnehmerprofile ermöglicht.

4. Verfahren gemäß Anspruch 1, 2 oder 3, **dadurch gekennzeichnet, dass** das Internet-Teilnehmerprofil Informationen in Bezug auf die Internet-Transaktionen umfasst, wie z.B. Informationen zur Zugriffsfilterung.

5. Verfahren gemäß einem der Ansprüche 1 bis 4, **dadurch gekennzeichnet, dass** das Internet-Teilnehmerprofil Informationen in Bezug auf die Telefonverbindung umfasst, z.B. Informationen zu Abrechnung, Bezahlung oder Freigabe von Anrufen.

6. Verfahren gemäß einem der Ansprüche 1 bis 5, **dadurch gekennzeichnet, dass** das Internet-Teilnehmerprofil für alle Internet Provider gemeinsame Informationen sowie für jeden Internet Provider spezifische Informationen umfasst.

7. Verfahren gemäß einem der Ansprüche 1 bis 6, **dadurch gekennzeichnet, dass** es einen Schritt zur Aktualisierung des Internet-Teilnehmerprofils durch den Internet Provider umfasst.

8. Verfahren gemäß einem der Ansprüche 1 bis 7, **dadurch gekennzeichnet, dass** es einen Schritt zur Aktualisierung des Internet-Teilnehmerprofils eines Nutzers durch den Nutzer selbst umfasst.

9. Verfahren gemäß einem der Ansprüche 1 bis 8, **dadurch gekennzeichnet, dass** es einen Schritt zur Erstellung eines Internet-Teilnehmerprofils durch das Anschaltenetz umfasst.

10. Verfahren gemäß einem der Ansprüche 1 bis 9, **dadurch gekennzeichnet, dass** das Internet-Teilnehmerprofil eines Nutzers nach einem Internet-Zugriff für den nächsten Zugriff gespeichert wird.

11. Verfahren gemäß einem der Ansprüche 1 bis 10, **dadurch gekennzeichnet, dass** das Internet-Teilnehmerprofil eines Nutzers bei einem Wechsel des Internet Providers beibehalten wird.

12. Intelligentes Zugriffsnetzwerk, das Mittel zur Zuordnung eines Internet-Teilnehmerprofils bei der Herstellung einer Telefonverbindung im Hinblick auf den Internet-Zugriff sowie Mittel zur Übertragung des Internet-Teilnehmerprofils an einen Internet Provider im Internet umfasst.

13. Netzwerk gemäß Anspruch 12, **gekennzeichnet durch** Vorrichtungen zum Empfang von Informationen zur Aktualisierung eines Internet-Teilnehmerprofils **durch** den Internet Provider.

14. Verfahren zur Personalisierung des Internet-Zugriffs, das Folgendes umfasst:
- Zuordnung eines Internet-Teilnehmerprofils für einen Nutzer durch ein Anschaltenetz; und
- Übertragung des Internet-Teilnehmerprofils bei der Herstellung einer Verbindung im Hinblick auf den Internet-Zugriff durch das Anschaltenetz an einen Internet Provider,

15. Verfahren gemäß Anspruch 14, **dadurch gekennzeichnet, dass** das Internet-Teilnehmerprofil Informationen in Bezug auf die Internet-Transaktionen umfasst, wie beispielsweise Informationen zur Zugriffsfilterung.

16. Verfahren gemäß Anspruch 14 oder 15, **dadurch gekennzeichnet, dass** das Internet-Teilnehmerprofil Informationen in Bezug auf die Telefonverbindung umfasst, wie beispielsweise Informationen zu Abrechnung, Bezahlung oder Freigabe von Anrufen.

17. Verfahren gemäß Anspruch 14, 15 oder 16, **dadurch gekennzeichnet, dass** das Internet-Teilnehmerprofil für alle Internet Provider gemeinsame Informationen sowie für jeden Internet Provider spezifische Informationen umfasst.
